# EUROPÄISCHE PATENTSCHRIFT

(11) **EP 2 220 353 B1**
(45) Veröffentlichungstag und Bekanntmachung des Hinweises auf die Patenterteilung: **21.09.2011**
(21) Anmeldenummer: 08784663.0
(22) Anmeldetag: 09.07.2008
(51) Int. Cl.: F02B 37/04, F02B 37/16, F02B 39/08, F02B 41/10, B60K 6/12, F02B 21/00

(54) **ANORDNUNGEN ZUR RÜCKGEWINNUNG UNGENUTZTER ENERGIE VON ABGAS EINER VERBRENNUNGSKRAFTMASCHINE UND ENTSPRECHENDE VERFAHREN**
SYSTEMS FOR RECOVERING THE UNUSED ENERGY OF EXHAUST GAS OF AN INTERNAL COMBUSTION ENGINE AND CORRESPONDING METHODS
DISPOSITIFS DE RÉCUPÉRATION D'ÉNERGIE NON UTILISÉE ISSUE DES GAZ D'ÉCHAPPEMENT D'UN MOTEUR À COMBUSTION INTERNE ET PROCÉDÉ CORRESPONDANT

(30) Priorität: 19.07.2007 DE 102007033693
(43) Veröffentlichungstag der Anmeldung: 25.08.2010
(73) Patentinhaber: KNORR-BREMSE Systeme für Nutzfahrzeuge GmbH, 80809 München (DE)
(72) Erfinder: GERUM, Eduard, 83026 Rosenheim (DE)
(74) Vertreter: Mattusch, Gundula
(86) Internationale Anmeldenummer: PCT/EP2008/005579
(87) Internationale Veröffentlichungsnummer: WO 2009/010216

(56) Entgegenhaltungen:
- EP-A- 0 645 272
- EP-A- 1 481 833
- DE-A1-102004 047 975
- DE-C1- 3 906 312

## Beschreibung

Die Erfindung betrifft Anordnungen und Verfahren zur Rückgewinnung ungenutzter Energie aus dem Abgas einer Verbrennungskraftmaschine.

Verbrennungskraftmaschinen, wie beispielsweise Otto- bzw. Dieselmotoren, weisen häufig aus Gründen der Leistungsdichte und des Wirkungsgrades eine Aufladung auf. Hierbei sind die so genannten Turbolader bzw. Abgasturbolader weit verbreitet. Bei diesen wird Abgas des Motors in den Turbolader auf dessen Turbine geleitet, welche ein Verdichterrad antreibt. Das Verdichterrad komprimiert die Ansaugluft für den Motor auf einen optimalen Wert und führt sie dem Motor über dessen Einlassventil entweder als Luft oder auch als Kraftstoff-/Luftgemisch zu. Eine solche Verbrennungskraftmaschine ist vom DE 10 2004 047 975 A bekannt.

Der Abgasturbolader und die dazugehörige Verbrennungskraftmaschine müssen bezüglich der Kennlinien für Förderleistung von Luft und Druck der komprimierten Luft aufeinander abgestimmt sein. Insbesondere im Beschleunigungsfall, in welchem eine große Luftmenge und ein hoher Druck erforderlich ist, ist ein überdimensionierter Turbolader von Vorteil. Andererseits können ein zu hoher Druck und eine zu große Fördermenge, zum Beispiel im stationären Betriebszustand des Motors und zu Beginn eines Schiebebetriebs bei einem Fahrzeugmotor, zu hoch sein, wodurch der Wirkungsgrad des Verbundes Turbolader und Verbrennungskraftmaschine geringer wird.

Eine Lösung für diesen Fall ist ein Turbolader mit variabler Geometrie, der auch mit der Abkürzung VTG bezeichnet wird. Hierbei sind stehende Leiträder vor der Abgasturbine zur Anpassung an unterschiedliche Bedingungen verstellbar ausgebildet. Ein Nachteil dabei besteht darin, dass im stationären Fall größere Strömungsverluste durch den Verstellmechanismus mit dem Ergebnis eines Druckabfalls erzeugt werden, was zu einem höheren Kraftstoffverbrauch führen kann.

Eine weitere Lösung ist ein Bypassventil, welches auch Waste Gate genannt wird. Dieses Ventil verhindert, dass der Motor mit einem zu hohen Ladedruck beaufschlagt wird und dass der Turbolader in einen zu hohen Drehzahlbereich beschleunigt. Das Waste Gate ist ein Ventil, welches im Abgasstrom vor der Abgasturbine angeordnet ist und bei einer bestimmten Betriebsbedingung öffnet und einen Teil des Abgases direkt unter Umgehung der Abgasturbine in einer Art Bypass in das Abgasrohr leitet. Damit sind die Probleme für Motor und Lader in Hinblick auf eine Überlastung gelöst. Aber es bleibt als Nachteil ein nicht unerheblicher Energieverlust und damit ein geringerer Wirkungsgrad für die Verbrennungskraftmaschine bestehen.

Es ist weiterhin bekannt, auf der Ladeluftseite des Turboladers zwischen Ausgang der Verdichterturbine und dem Einlass des Motors in bestimmten Betriebszuständen eine Luftentnahme am Motor vorzunehmen. Dieses kann zum Beispiel durch einen aufgeladenen Luftkompressor, wie zum Beispiel für einen Kompressor zur Bereitstellung von Druckluft für eine Betriebsbremse, erfolgen. Allerdings wird dabei eine Luftmenge der verdichteten Luft aus dem Ladeluftkreis des Motors abgezweigt, der eine zu geringe Förderleistung aufweisen kann und den Betriebszuständen von Motor und Lader nicht angepasst ist.

Es ist daher die Aufgabe der vorliegenden Erfindung, eine Anordnung zur Rückgewinnung der Energie von Abgas einer Verbrennungskraftmaschine zu schaffen, welche die oben genannten Nachteile nicht mehr aufweist und einen höheren Wirkungsgrad in der Ausnutzung des Kraftstoffs bietet.

Die Aufgabe wird durch eine Anordnung zur Rückgewinnung der Energie aus den Abgasen einer Verbrennungskraftmaschine mit den Merkmalen der Ansprüche 1 und 15 sowie durch ein Verfahren mit den Merkmalen des Anspruchs 17 gelöst.

Der Grundgedanke der Erfindung besteht darin, dass die von einem Luftkompressor entnehmbare Menge der komprimierten Ansaugluft einer Ladeeinrichtung einstellbar ist.

Dadurch kann ein Waste Gate Ventil erheblich verkleinert werden bzw. ganz entfallen. Die durch das Waste Gate Ventil mit dem dadurch entweichenden Abgas ebenfalls entweichende Energie, die vorher im unverbrannten Kraftstoff vorhanden war, wird zu einem großen Teil zurückgewonnen und kann in geeigneter Weise gespeichert werden, wodurch sie in einem bestimmten Maß abrufbar wird. Ein solcher Abruf kann den Wirkungsgrad der Verbrennungskraftmaschine erhöhen, indem die gespeicherte Energie der Maschine wieder zugeleitet wird, zum Beispiel zur Unterstützung des Motors in bestimmten Betriebszuständen, wie beispielsweise beim Anlassen.

Weiterhin ist durch eine einstellbare Entnahme von komprimierter Ansaugluft eine exaktere Einstellung des Verbundes Turbolader und Motor ermöglicht, wobei sich durch den erhöhten Wirkungsgrad eine bessere Wirtschaftlichkeit ergibt.

Weitere Merkmale und Vorteile der erfindungsgemäßen Bedienungseinheit sind Gegenstand der zugehörigen Unteransprüche.

Es ist bei einer bevorzugten Ausführung vorgesehen, dass die Teilmenge der komprimierten Ansaugluft in Abhängigkeit von zumindest einem Betriebsparameter der Verbrennungskraftmaschine und/oder von zumindest einem Betriebsparameter der Ladeeinrichtung einstellbar ist. Dabei ist es möglich, den Betriebszustand sowohl des Motors als auch des Laders mit in die Entnahmemenge der Teilmenge an komprimierter Luft mit einzubeziehen, wobei in jedem Betriebszustand des Motors und des Laders eine optimale Wirkung dieses Verbundes erzielt werden kann. Die Betriebszustände des Motors und der Ladeeinrichtung sind in Form von Parametern auf Grund von Messwerten von Sensoren der bereits vorhandenen Motorsteuerungen verfügbar, so dass hierzu keine zusätzlichen Installationen notwendig sind.

In einer weiteren Ausführung ist vorgesehen, dass die Teilmenge der komprimierten Ansaugluft über ein steuerbares Entnahmeventil einstellbar ist. Zum Beispiel durch einen Öffnungswinkel eines solchen Ventils ist durch einfache elektrische Steuerimpulse bzw. -spannungen die Teilmenge leicht einstellbar. Derartige Ventile sind handelsüblich, kostengünstig und in hoher Qualität auf dem Markt erhältlich.

Zusätzlich oder anstelle dieses Entnahmeventils ist in einer alternativen Ausführung vorgesehen, dass die entnehmbare Teilmenge der komprimierten Ansaugluft durch Einstellung einer Ansaugmenge des Luftkompressors einstellbar ist. Dazu wird ein Kompressor mit einer höheren Leistung eingesetzt, welcher einen höheren Kompressionsdruck liefert als derzeitige Kompressoren. Der Luftkompressor wird vorteilhafterweise für die Bereitstellung von Druckluft für eine Betriebsbremse verwendet. Es kann aber auch ein durch die Entnahmeluft unterstütztes angetriebenes Aggregat in einem Fahrzeug sein, wie zum Beispiel ein Lüfter für eine Klimaanlage oder dergleichen.

Wenn der Luftkompressor zur Einstellung der Ansaugmenge steuerbar antreibbar ausgebildet ist, ist es zusätzlich möglich, eine feinere Abstufung der entnommenen Teilmenge der komprimierten Ansaugluft zu erhalten. Dieses kann durch einen elektrischen Antrieb des Luftkompressors oder/und durch eine Kopplung mit der Verbrennungskraftmaschine erfolgen. Die Kopplung ist dabei zum Beispiel vorteilhafterweise schaltbar, wie im Fall einer Kupplung.

In einer alternativen Ausführung kann der Luftkompressor zur Einstellung der Ansaugmenge zumindest ein Steuerventil aufweisen. Der Luftkompressor kann zum Beispiel ein Radial- oder Kolbenverdichter sein. Dessen Ventile können als Steuerventile ausgebildet sein, und je nach Betriebszustand und Erfordernis die Teilmenge der komprimierten Luft einstellen. Der Luftkompressor kann auch mehrere Verdichterstufen, Zylinder oder Turbinen, aufweisen, die je nach Erfordernis durch Steuerventile zur Entnahme der Teilmenge der komprimierten Luft des Laders hinzu- oder abschaltbar sind. Dazu können auch die in einem Kolbenverdichter vorhandenen Ventile benutzt werden bzw. können diese in geeigneter Form abgeändert sein.

Da die durch den Luftkompressor entnommene Luft komprimiert ist, und somit eine bestimmte Energiemenge, die vorher im Abgas gespeichert war, aufweist, kann diese auf die komprimierte Luft übertragene Energie auch zur Unterstützung des Antriebs des Luftkompressors (oder des jeweiligen Aggregats) verwendet werden.

Es ist weiterhin in der Erfindung vorgesehen, dass der Luftkompressor mit zumindest einem Luftspeicherbehälter zur Speicherung der Teilmenge der komprimierten

Ansaugluft verbunden ist. Die von dem Luftkompressor entnommene Teilmenge komprimierter Luft kann von ihm weiter komprimiert und in einen Speicher geleitet werden, wo sie zum Beispiel der Druckluft für eine Betriebsbremse addiert wird. Die Teilmenge kann aber auch in einem separaten Behälter gespeichert werden, aus dem sie dann für verschiedene Zwecke abrufbar (beispielsweise über bestimmte Ventile und Antriebskreise für Lüftungsantriebszwecke oder dergleichen) ist.

Der Luftkompressor ist für einen Antrieb durch in dem zumindest einen Luftspeicherbehälter gespeicherte komprimierte Luft umsteuerbar ausgebildet, dann kann der Luftkompressor als Motor arbeiten und die in der Luft gespeicherte Abgasenergie der Verbrennungskraftmaschine als Unterstützung zur Verfügung stellen, wie zum Beispiel beim Anlassen oder bei bestimmten Betriebszuständen wie Fahren auf einer Ebene.

Dazu wird die Kopplung des Luftkompressors mit der Verbrennungskraftmaschine verwendet, zum Beispiel mittels einer Kupplung. Diese Kopplung dient sowohl zur Einleitung eines Drehmomentes vom Luftkompressor, der von gespeicherter Luft angetrieben wird, in die Verbrennungskraftmaschine, als auch von der Verbrennungskraftmaschine in den Luftkompressor für dessen Antrieb bei bestimmten Betriebszuständen.

Es ist bevorzugt in einer Ausführung vorgesehen, dass die Anordnung eine Steuereinrichtung zur Steuerung der einstellbaren Teilmenge der komprimierten Ansaugluft aufweist. Diese Steuerung führt alle Einstellungen gemäß der Betriebsparameter und Kennlinienfelder der Verbrennungskraftmaschine und des Motors durch, die in ihr zum Beispiel in Tabellenform in Speichervorrichtungen abgelegt sind. Sie steuert die jeweiligen Ventile und kann anhand der Betriebskennlinie des Luftkompressors dann berechnen, welche Teilmenge an komprimierter Luft entnommen wird/wurde und diese Daten der übergeordneten Motorsteuereinrichtung zur Verfügung stellen, wodurch der Gesamtwirkungsgrad optimiert werden kann. Dabei kann auch unter Berücksichtigung des Fahrerwunsches und des Kennfeldes von Motor und Lader berechnet werden, welche Abgasmenge bei den nächsten wenigen Ladezyklen produziert wird.

Es ist vorteilhaft, dass die Steuereinrichtung ein Bestandteil einer Steuereinheit der Verbrennungskraftmaschine ist. Dadurch werden eine Teilezahl und ein Platzbedarf von Komponenten reduziert.

In einer alternativen Ausführung ist vorgesehen, dass der Luftkompressor als so genannter intelligenter Luftkompressor mit einer eigenen Steuereinrichtung ausgebildet ist. Diese kann mit einer vorhandenen Motorsteuerung zum Beispiel über einen fahrzeugintemen Bus kommunizieren. In dem Fall, in welchem der Luftkompressor sowohl einen Luftmotor (auch als Air Motor bezeichnet) als auch einen Kompressor bilden kann, ist ein solcher intelligenter Kompressor besonders vorteilhaft. Hierbei können zum Beispiel zusätzliche Ventile entfallen, da diese schon in ihm integriert sind. Somit sind beispielsweise nur die jeweiligen Anschlüsse zum Luftbehälter und zur Luftleitung zu verbinden.

Hierbei ist es auch möglich, dass der Luftkompressor in einem Betriebszustand als eine zusätzliche Motorbremse eingesetzt wird. Dazu wird beispielsweise die Kopplung mit der Verbrennungskraftmaschine eingeschaltet, wobei zum Beispiel die Ventile des Luftkompressors geschlossen sind und er nur Verdichtungsarbeit leistet.

In einer weiteren alternativen Ausführung weist die Anordnung einen mit einer Abgasleitung der Verbrennungskraftmaschine verbundenen und vom Abgas antreibbaren Abgaskompressor auf, welcher mit der Verbrennungskraftmaschine koppelbar und/oder als Luftverdichter ausgebildet ist. Hiermit wird weiterhin Energie des Abgases vorteilhaft ausgenutzt, indem der vom Abgas angetriebene Abgaskompressor als Air Motor ein Drehmoment erzeugt, welches zur Unterstützung des Drehmomentes der Verbrennungskraftmaschine auf die diese über eine Kupplung geleitet wird. Es ist auch möglich, dass der vom Abgas angetriebene Kompressor als weitere Luftkompressor arbeitet, wobei er zusätzlich Luft verdichtet und den Luftspeichern des Fahrzeugs zuführt.

Der Abgaskompressor kann über zumindest ein Ventil steuerbare sein. Es kann auch als ein intelligenter Kompressor ausgebildet sein. Es ist selbstverständlich auch möglich, dass der Abgaskompressor als eine zusätzliche Motorbremse verwendbar ist, indem er mit der Verbrennungskraftmaschine gekoppelt wird und Verdichtungsarbeit leistet. In einer noch weiteren Ausführung ist vorgesehen, dass die Ladeeinrichtung mit einer Zusatzluftversorgungseinrichtung zur gesteuerten Zuführung von zumindest einer Teilmenge komprimierter gespeicherter Zusatzluft verbunden ist. Damit ist es vorteilhaft möglich einerseits ein so genanntes Turboloch zu beheben und andererseits eine weitere Motorbremsfunktion zu bilden. Die Motorbremsfunktion wird dadurch erreicht, dass die Verbrennungskraftmaschine im Betriebszustand Motorbremse die zugeführte Zusatzluft zusätzlich zur Ansaugluft verdichtet.

Eine weitere alternative Ausführung sieht eine Anordnung zur Rückgewinnung von Energie aus dem Abgas einer Verbrennungskraftmaschine vor, welche Folgendes aufweist:
eine vom Abgas angetriebenen Ladeeinrichtung zur Erzeugung komprimierter Ansaugluft für die Verbrennungskraftmaschine; einen ersten Luftmotor bzw. Air Motor, welcher mittels gespeicherter Druckluft und/oder komprimierter Ansaugluft der Ladeeinrichtung zur Erzeugung eines Drehmomentes antreibbar und mit der Verbrennungskraftmaschine zur Drehmomentübertragung koppelbar ist; und/oder
einen zweiten Luftmotor bzw. Air Motor, welcher mittels gespeicherter Druckluft und/oder Abgas der Verbrennungskraftmaschine zur Erzeugung eines Drehmomentes antreibbar und mit der Verbrennungskraftmaschine zur Drehmomentübertragung koppelbar ist.

Erfindungsgemäss ist der erste Luftmotor ein umsteuerbarer Luftkompressor und der zweite Luftmotor ein umsteuerbarer Abgaskompressor ist. Somit sind vorteilhaft jeweils zwei Funktionen, nämlich Verdichten von Luft und Antreiben durch Luft bzw. Abgas in einer Funktionseinheit enthalten.

Eine Verbrennungskraftmaschine weist die oben beschriebene Anordnung zur Rückgewinnung von Energie aus dem Abgas der Verbrennungskraftmaschine auf.

Die Erfindung wird nun anhand beispielhafter Ausführungen mit Bezug auf die beigefügte Zeichnung näher erläutert. Hierbei zeigt:
- Fig. 1: ein Blockdiagramm zum Energiefluss eines ersten Ausführungsbeispiels einer erfindungsgemäßen Anordnung;
- Fig. 2: ein Blockdiagramm zum Energiefluss eines zweiten Ausführungsbeispiels der erfindungsgemäßen Anordnung;
- Fig. 3: ein Blockdiagramm zum Energiefluss eines dritten Ausführungsbeispiels der erfindungsgemäßen Anordnung; und
- Fig. 4: ein detailliertes Blockdiagramm eines vierten Ausführungsbeispiels der erfindungsgemäßen Anordnung.

Gleiche Bezugszeichen betreffen gleiche oder ähnliche Elemente mit gleichen oder ähnlichen Funktionen.

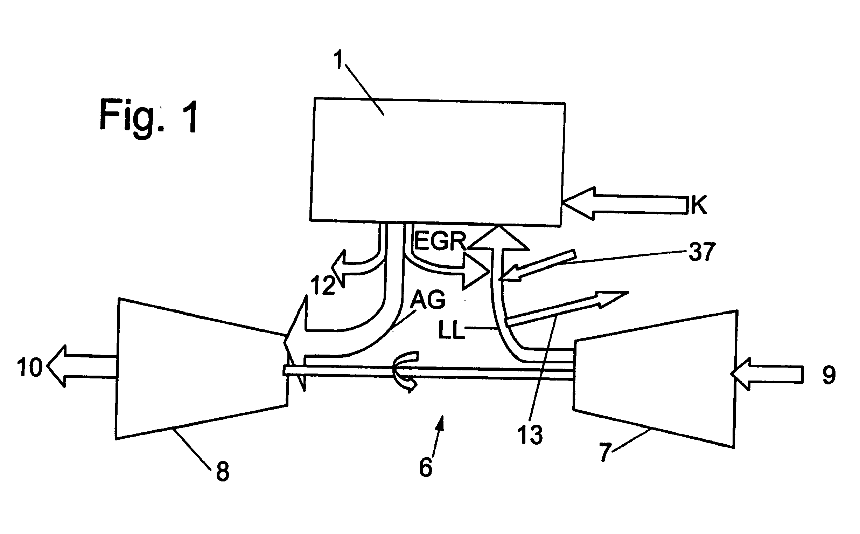

Fig. 1 zeigt ein Blockdiagramm zum Energiefluss eines ersten Ausführungsbeispiels einer erfindungsgemäßen Anordnung. Eine Verbrennungskraftmaschine 1 wird mit Kraftstoff K beschickt. Zur Verbrennung des Kraftstoffs K wird Luft über eine erste Ansaugleitung 9 benötigt, welche durch eine Verdichterturbine 7 einer Ladereinrichtung 6 komprimiert über eine Ladeluftleitung LL der Verbrennungskraftmaschine 1 7zugeführt wird. Die in der Verbrennungskraftmaschine 1 bei der Verbrennung entstehenden Abgase 10 werden durch eine Abgasleitung AG in eine Abgasturbine 8 der Ladereinrichtung 6 geleitet und geben dort einen Teil ihrer Energie zur Komprimierung der Ansaugluft ab. Ein Teil der Abgase wird über eine Abgasrückführung EGR der Ansaugluft zugefiihrt. Ein weiterer Teil der Abgase entweicht über eine Bypassleitung 12.

Die der komprimierten Ansaugluft nach der Verdichterturbine 7 innewohnende Energie wird über eine Entnahmeleitung 13 entnommen, was weiter unten ausführlicher beschrieben wird. Durch eine Zusatzluftleitung 37 kann Zusatzluft der Ansaugluft hinzugefiigt werden.

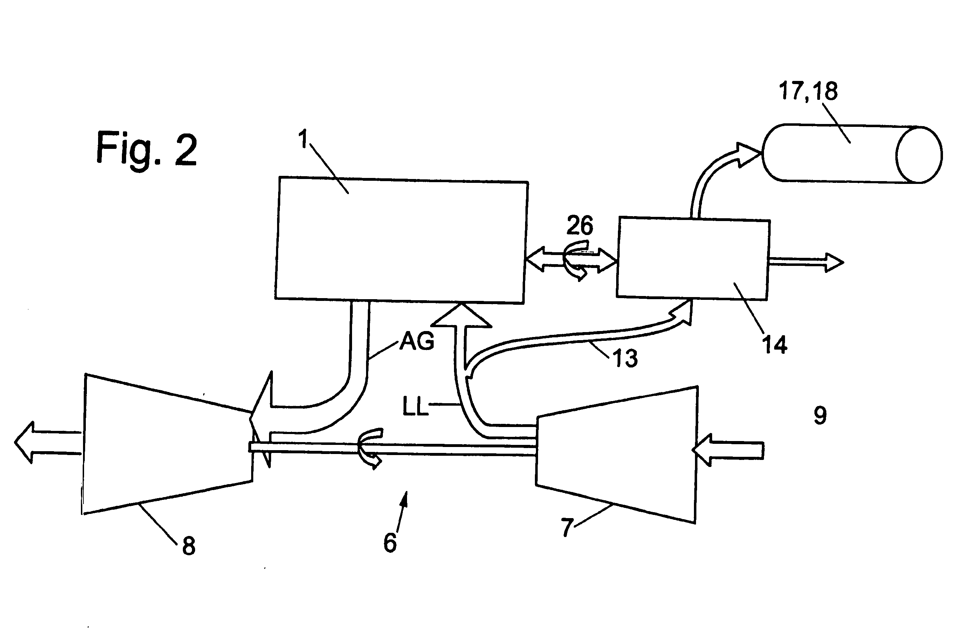

In Fig. 2 ist ein Blockdiagramm zum Energiefluss eines zweiten Ausfiihrungsbeispiels der erfindungsgemäßen Anordnung gezeigt. Hierbei ist die Entnahmeleitung 13 mit einem Luftkompressor 14 verbunden, welcher mit der Verbrennungskraftmaschine 1 über eine Kupplungseinrichtung 26 gekoppelt und mit einem Luftspeicherbehälter 17, 18 verbunden ist. Die Energie der entnommenen Ansaugluft treibt den Luftkompressor 14 dergestalt an, dass er als Luftmotor bzw. Air Motor ein Drehmoment erzeugt, das über die Kupplungseinrichtung 26 an die Verbrennungskraftmaschine 1 übertragen wird, und/oder Luft komprimiert, die in dem Luftspeicherbehälter 17 gespeichert wird. Überschüssige Luft kann in die Atmosphäre AT entweichen.

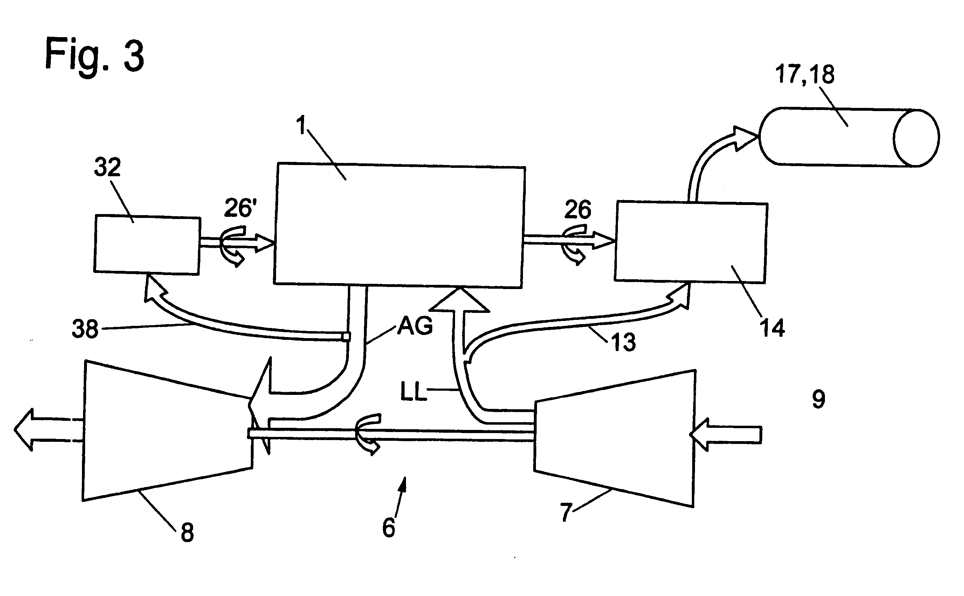

Schließlich zeigt Fig. 3 ein Blockdiagramm zum Energiefluss eines dritten Ausfiihrungsbeispiels der erfindungsgemäßen Anordnung, welche dem zweiten Ausführungsbeispiel nach Fig. 2 entspricht und zusätzlich einen weiteren Luftmotor in Form eines Abgaskompressors 32 aufweist. Dieser Abgaskompressor 32 wird von einem Teil des Abgasstroms über eine Abgasentnahmeleitung 38 angetrieben und erzeugt ein Drehmoment, welches mittels einer weiteren Kupplungseinrichtung 26' auf die Verbrennungskraftmaschine 1 übertragbar ist.

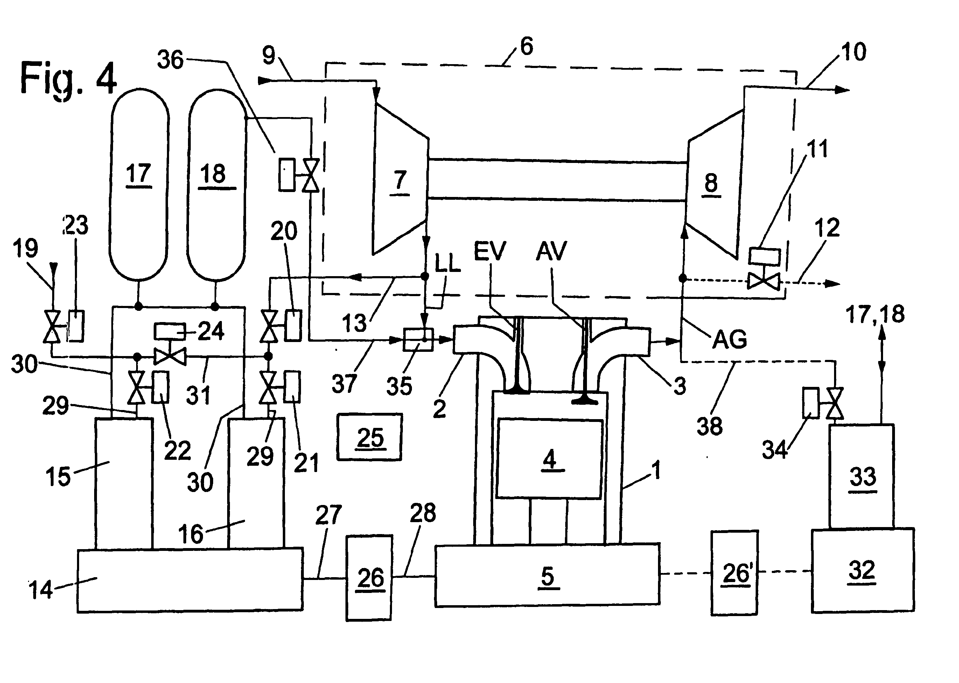

In Fig. 4 ist ein detailliertes viertes Ausführungsbeispiel dargestellt, wobei das erste bis dritte Ausführungsbeispiel nach Fig. 1 bis 3 eingeschlossen ist.

Die Verbrennungskraftmaschine 1, in diesem Beispiel ein Motor, der nur schematisch mit einem Kolben 4 in einem Zylinder, einem Einlassventil EV, einem Auslassventil AV und einem Kurbelgehäuse 5 dargestellt ist, ist mit der Ladeeinrichtung 6 verbunden. Die Ladeeinrichtung 6 ist in diesem Beispiel ein Abgasturbolader, dessen Abgasturbine 8 mit einer Auslassleitung 3 des Motors und dessen Verdichterturbine 7 mit einer Einlassleitung 2 des Motors verbunden sind.

Die Verdichterturbine 7 und die Abgasturbine 8 sind auf einer Welle drehfest miteinander gekoppelt. Die Abgasturbine 8 wird von dem Abgas AG aus dem Auslass 3 des

Motors angetrieben und dreht dabei die Verdichterturbine 7, welche über die erste Ansaugleitung 9 Luft ansaugt, komprimiert und über die Ladeluftleitung LL in den Einlass 2 des Motors presst.

Zwischen dem Auslass 3 des Motors und dem Einlass der Abgasturbine 8 ist die Bypassleitung 12 gestrichelt mit einem Bypassventil 11 angedeutet. Das Bypassventil 11 ist ein so genanntes Waste Gate Ventil, welches bei Anwendung der erfindungsgemäßen Anordnung sehr klein ausfallen oder entfallen kann. Seine Funktion ist bereits in der Beschreibungseinleitung erläutert und soll hier nicht wiederholt werden.

Zwischen dem Einlass 2 des Motors und dem Auslass der Verdichterturbine 7 ist eine Entnahmeleitung 13 mit einem Ende mit der Ladeleitung LL und mit einem anderen Ende mit einem Entnahmeventil 20 verbunden. Das Entnahmeventil 20 ist an ein erstes Steuerventil 21 und in diesem Beispiel über eine Verbindungsleitung 31 an ein viertes Steuerventil 24 angeschlossen. Das erste Steuerventil 21 ist mit einem ersten Anschluss 29 eines zweiten Kompressorzylinders 16 eines Luftkompressors 14 verbunden. Das vierte Steuerventil 24 ist mit einem zweiten Steuerventil 22 und einem dritten Steuerventil 23 verbunden. Das zweite Steuerventil 22 ist an dem ersten Anschluss 29 eines ersten Kompressorzylinders 15 des Luftkompressors 14 angeschlossen. Das dritte Steuerventil 23 ist mit einer zweiten Ansaugleitung 19 für Luft verbunden.

Jeder Kompressorzylinder 15, 16 weist einen zweiten Anschluss 30 auf, der an einem ersten und zweiten Luftspeicherbehälter 17 und 18 angeschlossen ist.

Der Luftkompressor 14 ist in diesem Beispiel ein Luftkompressor für Druckluft für eine Betriebsbremse eines nicht gezeigten Fahrzeugs. Er wird weist hier einen Kompressorantrieb 27 auf, der über eine Kupplungseinrichtung 26 mit einem Abtrieb der Verbrennungskraftmaschine 1 gekoppelt ist. Die Kupplungseinrichtung 26 ist vorzugsweise elektrisch steuerbar.

Eine Steuereinrichtung 25 ist nur schematisch als Block angedeutet und mit den Steuerventilen 11, 20 bis 24, der Kupplungseinrichtung 26 und einer nicht gezeigten übergeordneten Motorsteuereinrichtung sowie etlichen nicht dargestellten Sensoren zur Erfassung der Betriebszustände von Verbrennungskraftmaschine 1 und Ladeeinrichtung 6 verbunden.

Die Steuereinrichtung 25 und die Ventile 20-24 können auch in den Luftkompressor 14 integriert sein, welcher damit einen so genannten intelligenten Kompressor bildet.

Die Steuereinrichtung 25 weist außerdem in Speichereinrichtungen gespeicherte Kennlinienwerte der Verbrennungskraftmaschine 1 und der Ladeeinrichtung 6 auf. Anhand dieser und der Sensorwerte ist sie in der Lage, die an ihr angeschlossenen steuerbaren Komponenten 11, 20 bis 24, 26 so einzustellen, dass die komprimierte Ansaugluft aus der Verdichterturbine 7 aus der Ladeluftleitung LL über das Entnahmeventil 20 und das erste Steuerventil 21 in den zweiten Kompressorzylinder 16 in einem bestimmten Betriebszustand der Verbrennungskraftmaschine 1 und der Ladeeinrichtung 6 in der notwendigen Teilmenge entnommen wird. Diese Teilmenge kann die Steuereinrichtung 25 anhand der gespeicherten Tabellenwerte berechnen und der übergeordneten Motorsteuereinrichtung zur Verfügung stellen.

In einer ersten Stufe als Beispiel öffnet die Steuereinrichtung 25 das Entnahmeventil 20 um einen bestimmten Wert, öffnet das erste Steuerventil 21 und lässt das zweite bis vierte Steuerventil 22 bis 24 geschlossen.

Die entnommene Teilmenge an komprimierter Ansaugluft wird im zweiten Kompressorzylinder 16 weiter verdichtet und in die Luftspeicherbehälter 17, 18 gefördert.

Zur Vergrößerung der Entnahmemenge kann die Steuereinrichtung 25 zunächst das Entnahmeventil 20 weiter öffnen (vorausgesetzt, es ist ein Stellventil) und dann das vierte Steuerventil 24 und das zweite Steuerventil 22 öffnen, so dass der erste Kompressorzylinder 15 auch zur Entnahme der komprimierten Ansaugluft aus der Ladeluftleitung LL zur Verfügung steht und diese weiter verdichtet, wie für den zweiten Kompressorzylinder 16 beschrieben ist.

Wenn keine Luftentnahme aus der Ladeluftleitung LL erfolgt, kann der Luftkompressor 14 über das dritte Steuerventil 23 aus der zweiten Ansaugleitung Luft ansaugen und für die Betriebsbremse in die Luftspeicherbehälter 17, 18 komprimieren. Das kann entweder nur über den ersten Kompressorzylinder 15 (Steuerventile 20, 21 und 24 geschlossen und Steuerventile 23 und 22 offen) oder über beide Kompressorzylinder 15 und 16 (Steuerventil 20 geschlossen und Steuerventile 21, 22, 23 und 24 offen).

Es ist auch der Fall möglich, indem der Luftkompressor 14 mit dem ersten Kompressorzylinder 15 Luft aus der zweiten Ansaugleitung 19 fördert und mit dem zweiten Kompressorzylinder 16 komprimierte Luft aus der Ladeluftleitung LL entnimmt. Dabei ist folgender Zustand der Steuerventile gegeben: 20 bis 23 offen und 24 geschlossen. Die in den zweiten Kompressorzylinder 16 einströmende komprimierte Luft aus der Ladeluftleitung LL kann den Antrieb des Luftkompressors 14 durch die in ihr bereits gespeicherte Energie unterstützen.

Durch die Steuereinrichtung 25 und die erfindungsgemäße Anordnung ist es möglich, den Wirkungsgrad der Verbrennungskraftmaschine 1 zu erhöhen, indem die in dem Abgas 10 gespeicherte Energie in der komprimierten Ladeluft über den Luftkompressor 14 gezielt und somit gesteuert in Abhängigkeit vom Betriebszustand des Motors und der Ladeeinrichtung 6 entnommen wird.

Die Erfindung ist nicht auf das erläuterte Ausführungsbeispiel beschränkt, sondern im Rahmen der beigefügten Ansprüche vielfältig modifizierbar.

Es ist auch möglich, dass der Luftkompressor 14 nur einen Kompressorzylinder oder mehr als zwei aufweist, die dann durch weitere Steuerventile stufenweise hintereinander oder parallel geschaltet werden können.

Der Luftkompressor 14 kann auch als Motor fungieren, indem die in den Luftspeicherbehältem 17, 18 gespeicherte komprimierte Luft zu seinem Antrieb benutzt wird, wobei seine nicht gezeigten Ventile entsprechend gesteuert werden. Dabei wirkt sein Antrieb als Drehmoment über den Kompressorantrieb (Welle), die Kupplungseinrichtung 26 und den Abtrieb 28 auf die Verbrennungskraftmaschine 1. Dies kann zum Beispiel in bestimmten Betriebszuständen des Motors unterstützend wirken oder zum Anlassen oder zur Anlassunterstützung wirksam sein.

Der Luftkompressor 14 kann auch ein Radialverdichter sein.

Es ist auch denkbar, dass der Luftkompressor 14 durch die komprimierte Luft aus der Ladeleitung LL aufgeladen wird, um die Komprimierung der Druckluft für die Betriebsbremse zu unterstützen.

Weiterhin kann der Luftkompressor 14 auch ein Antrieb für diverse Aggregate in einem Fahrzeug, wie zum Beispiel Lüfter, dienen.

Die Luftspeicherbehälter 17, 18 können auch separat von einander an den Luftkompressor 14 angeschlossen sein.

In einer alternativen Ausführung ist ein weiterer Kompressor in Form eines Abgaskompressors 32 vorgesehen, der ebenfalls mit der Verbrennungskraftmaschine 1 über eine weitere Kupplungseinrichtung 26' koppelbar (gestrichelt gezeichnet) ist. In diesem Beispiel weist der Abgaskompressor 32 einen Abgaskompressorzylinder 33 auf. Selbstverständlich sind mehrere möglich. Der Abgaskompressorzylinder 33 ist über ein Abgasventil 34 mit der Abgasleitung AG zum Antrieb des Abgaskompressors 32 durch Abgas verbunden. Der Abgaskompressor 32 kann auch zur Verdichtung von weiterer Luft verwendet werden, welche er den Luftspeicherbehältern 17, 18 zuführen kann. Es ist auch möglich, dass der Abgaskompressor 32 von der in den Luftspeicherbehältern 17, 18 gespeicherten Luft antreibbar ist.

Weiterhin ist die Luftladeleitung LL mit einer Zusatzluftversorgungseinrichtung 35 versehen, welche in diesem Beispiel über ein Zusatzluftventil 36 mit dem Luftspeicherbehälter 18 verbunden ist. Hiermit ist es möglich, der Verbrennungskraftmaschine 1 zusätzliche Luft zuzuführen, um zum Beispiel ein so genanntes Turboloch zu beheben oder im Betriebszustand Motorbremse den Wirkungsgrad der Motorbremse zu erhöhen, indem die zusätzliche Luft von der Verbrennungskraftmaschine 1 verdichtet wird.

### Bezugszeichenliste

- 1: Verbrennungskraftmaschine
- 2: Einlassleitung
- 3: Auslassleitung
- 4: Kolben
- 5: Kurbelgehäuse
- 6: Ladereinrichtung
- 7: Verdichterturbine
- 8: Abgasturbine
- 9: Erste Ansaugleitung
- 10: Abgas
- 11: Bypassventil
- 12: Bypassleitung
- 13: Entnahmeleitung
- 14: Luftkompressor
- 15: Erster Kompressorzylinder
- 16: Zweiter Kompressorzylinder
- 17: Erster Luftspeicherbehälter
- 18: Zweiter Luftspeicherbehälter
- 19: Zweite Ansaugleitung
- 20: Entnahmeventil
- 21: Erstes Steuerventil
- 22: Zweites Steuerventil
- 23: Drittes Steuerventil
- 24: Viertes Steuerventil
- 25: Steuereinrichtung
- 26,26': Kupplungseinrichtung
- 27: Kompressorantrieb
- 28: Abtrieb
- 29: Erster Anschluss
- 30: Zweiter Anschluss
- 31: Verbindungsleitung
- 32: Abgaskompressor
- 33: Abgaskompressorzylinder
- 34: Abgasventil
- 35: Zusatzluftversorgungseinrichtung
- 36: Zusatzluftventil
- 37: Zusatzluftleitung
- 38: Abgasentnahmeleitung
- AG: Abgasleitung
- AT: Atmosphäre
- AV: Auslassventil
- EGR: Abgasrückführung
- EV: Einlassventil
- K: Kraftstoffzufuhr
- LL: Ladeluftleitung

## Patentansprüche

1. Anordnung zur Rückgewinnung von Energie aus dem Abgas (10) einer Verbrennungskraftmaschine (1) mit:
a) einer vom Abgas (10) angetriebenen Ladeeinrichtung (6) zur Erzeugung komprimierter Ansaugluft für die Verbrennungskraftmaschine (1); und
b) einem Luftkompressor (14) mit zumindest einer Verdichtungsstufe, welcher mit der Ladeeinrichtung (6) zur Entnahme von zumindest einer Teilmenge der komprimierten Ansaugluft verbunden ist;
c) wobei die von dem Luftkompressor (14) entnehmbare Teilmenge der komprimierten Ansaugluft der Ladeeinrichtung (6) einstellbar ist, und
d) wobei der Luftkompressor (14) mit zumindest einem Luftspeicherbehälter (17, 18) zur Speicherung der Teilmenge der komprimierten Ansaugluft verbunden ist,
**dadurch gekennzeichnet, dass**
e) der Luftkompressor (14) für einen Antrieb durch in dem zumindest einen Luftspeicherbehälter (17, 18) gespeicherte komprimierte Luft umsteuerbar ausgebildet ist.

2. Anordnung nach Anspruch 1, **dadurch gekennzeichnet, dass** die Teilmenge der komprimierten Ansaugluft in Abhängigkeit von zumindest einem Betriebsparameter der Verbrennungskraftmaschine (1) und/oder von zumindest einem Betriebsparameter der Ladeeinrichtung (6) einstellbar ist.

3. Anordnung nach Anspruch 1 oder 2, **dadurch gekennzeichnet, dass** die Teilmenge der komprimierten Ansaugluft über ein steuerbares Entnahmeventil (20) einstellbar ist.

4. Anordnung nach einem der vorhergehenden Ansprüche, **dadurch gekennzeichnet, dass** die entnehmbare Teilmenge der komprimierten Ansaugluft durch Einstellung einer Ansaugmenge des Luftkompressors (14) einstellbar ist.

5. Anordnung nach Anspruch 4, **dadurch gekennzeichnet, dass** der Luftkompressor (14) zur Einstellung der Ansaugmenge steuerbar antreibbar ausgebildet ist.

6. Anordnung nach Anspruch 5, **dadurch gekennzeichnet, dass** der Luftkompressor (14) mit der Verbrennungskraftmaschine (1) koppelbar ausgebildet ist.

7. Anordnung nach Anspruch 4, 5 oder 6, **dadurch gekennzeichnet, dass** der Luftkompressor (14) zur Einstellung der Ansaugmenge zumindest ein Steuerventil (21, 22, 23, 24) aufweist.

8. Anordnung nach einem der vorhergehenden Ansprüche, welche weiterhin eine Steuereinrichtung (25) zur Steuerung der einstellbaren Teilmenge der komprimierten Ansaugluft aufweist.

9. Anordnung nach Anspruch 8, **dadurch gekennzeichnet, dass** die Steuereinrichtung (25) ein Bestandteil einer Steuereinheit der Verbrennungskraftmaschine (1) ist.

10. Anordnung nach Anspruch 8, **dadurch gekennzeichnet, dass** der Luftkompressor (14) als intelligenter Luftkompressor (14) mit einer eigenen Steuereinrichtung (25) ausgebildet ist.

11. Anordnung nach dem Oberbegriff des Anspruchs 1 oder nach einem der vorhergehenden Ansprüche, **dadurch gekennzeichnet, dass** die Anordnung einen mit einer Abgasleitung (AG) der Verbrennungskraftmaschine (1) verbundenen und vom Abgas antreibbaren Abgaskompressor (32) aufweist, welcher mit der Verbrennungskraftmaschine (1) koppelbar und/oder als Luftverdichter ausgebildet ist.

12. Anordnung nach Anspruch 11, **dadurch gekennzeichnet, dass** der Abgaskompressor (32) über zumindest ein Ventil (34) steuerbar ist.

13. Anordnung nach Anspruch 11 oder 12, **dadurch gekennzeichnet, dass** der Abgaskompressor (32) als intelligenter Kompressor mit einer eigenen, in ihm integrierten Steuereinheit ausgebildet ist.

14. Anordnung nach einem der vorhergehenden Ansprüche, **dadurch gekennzeichnet, dass** die Ladeeinrichtung (6) mit einer Zusatzluftversorgungseinrichtung (35) zur gesteuerten Zuführung von zumindest einer Teilmenge komprimierter gespeicherter Zusatzluft verbunden ist.

15. Anordnung zur Rückgewinnung von Energie aus dem Abgas (10) einer Verbrennungskraftmaschine (1) mit:
a) einer vom Abgas (10) angetriebenen Ladeeinrichtung (6) zur Erzeugung komprimierter Ansaugluft für die Verbrennungskraftmaschine (1);
b) einem ersten Luftmotor bzw. Air Motor, welcher mittels gespeicherter Druckluft und/oder komprimierter Ansaugluft der Ladeeinrichtung zur Erzeugung eines Drehmomentes antreibbar und mit der Verbrennungskraftmaschine zur Drehmomentübertragung koppelbar ist; und/oder
c) einem zweiten Luftmotor bzw. Air Motor, welcher mittels gespeicherter Druckluft und/oder Abgas der Verbrennungskraftmaschine zur Erzeugung eines Drehmomentes antreibbar und mit der Verbrennungskraftmaschine zur Drehmomentübertragung koppelbar ist,
**dadurch gekennzeichnet, dass**
d) der erste Luftmotor ein umsteuerbarer Luftkompressor (14) und der zweite Luftmotor ein umsteuerbarer Abgaskompressor (32) ist.

16. Verbrennungskraftmaschine (1) mit einer Anordnung zur Rückgewinnung von Energie aus dem Abgas (10) der Verbrennungskraftmaschine (1) nach einem der vorhergehenden Ansprüche.

17. Verfahren zum Rückgewinnen von ungenutzter Energie von Abgas (10) einer Verbrennungskraftmaschine (1), wobei eine Teilmenge von durch eine vom Abgas (10) angetriebene Ladeeinrichtung (6) komprimierter Ansaugluft der Verbrennungskraftmaschine (1) durch einen Luftkompressor (14) mit mindestens einer Verdichterstufe entnommen und in zumindest einem Luftspeicherbehälter (17, 18) gespeichert wird, wobei die von dem Luftkompressor (14) entnehmbare Teilmenge der komprimierten Ansaugluft der Ladeeinrichtung (6) eingestellt wird,
**dadurch gekennzeichnet, dass** der Luftkompressor (14) umgesteuert wird und als ein durch die in dem zumindest einen Luftspeicherbehälter (17, 18) gespeicherte Druckluft und/oder durch der Ladeeinrichtung (6) entnommene komprimierte Ansaugluft angetriebener erster Luftmotor ein Drehmoment erzeugt, das über eine steuerbare Kupplungseinrichtung (26) auf die Verbrennungskraftmaschine (1) übertragen wird.

18. Verfahren nach Anspruch 17, wobei zumindest eine Teilmenge von Abgas (10) zum Antreiben eines Abgaskompressors (32) zum Verdichten von Luft zum Speichern in dem Luftspeicherbehälter (17, 18) verwendet wird, **dadurch gekennzeichnet, dass** der Abgaskompressor (32) umgesteuert wird und als ein durch die in dem zumindest einen Luftspeicherbehälter (17, 18) gespeicherte Druckluft und/oder durch Abgas der Verbrennungskraftmaschine (1) angetriebener zweiter Luftmotor ein Drehmoment erzeugt, das über eine steuerbare Kupplungseinrichtung (26') auf die Verbrennungskraftmaschine (1) übertragen wird.

19. Verfahren nach Anspruch 17 oder 18, **dadurch gekennzeichnet, dass** zumindest eine Teilmenge gespeicherter Luft aus dem Luftspeicherbehälter (17, 18) der Verbrennungskraftmaschine (1) zusätzlich zu der komprimierten Ansaugluft zugeführt wird.

## Claims

1. Arrangement for recovering energy from the exhaust gas (10) of an internal combustion engine (1), having:
a) a turbocharger device (6), which is driven by the exhaust gas (10), for generating compressed intake air for the internal combustion engine (1); and
b) an air compressor (14) with at least one compression stage, which air compressor (14) is connected to the turbocharger device (6) for extracting at least a partial quantity of the compressed intake air;
c) wherein that partial quantity of the compressed intake air of the turbocharger device (6) that can be extracted by the air compressor (14) can be adjusted, and
d) wherein the air compressor (14) is connected to at least one air storage tank (17, 18) for storing the partial quantity of the compressed intake air,
**characterized in that**
e) the air compressor (14) is of reversible design such that it can be driven by compressed air stored in the at least one air storage tank (17, 18).

2. Arrangement according to Claim 1, **characterized in that** the partial quantity of the compressed intake air can be adjusted as a function of at least one operating parameter of the internal combustion engine (1) and/or of at least one operating parameter of the turbocharger device (6).

3. Arrangement according to Claim 1 or 2, **characterized in that** the partial quantity of the compressed intake air can be adjusted by means of a controllable extraction valve (20).

4. Arrangement according to one of the preceding claims, **characterized in that** the extractable partial quantity of the compressed intake air can be adjusted by adjusting an intake quantity of the air compressor (14).

5. Arrangement according to Claim 4, **characterized in that** the air compressor (14) is designed such that it can be driven in a controllable fashion in order to adjust the intake quantity.

6. Arrangement according to Claim 5, **characterized in that** the air compressor (14) is designed such that it can be coupled to the internal combustion engine (1).

7. Arrangement according to Claim 4, 5 or 6, **characterized in that** the air compressor (14) has at least one control valve (21, 22, 23, 24) for adjusting the intake quantity.

8. Arrangement according to one of the preceding claims, which also has a control device (25) for controlling the adjustable partial quantity of the compressed intake air.

9. Arrangement according to Claim 8, **characterized in that** the control device (25) is a constituent part of a control unit of the internal combustion engine (1).

10. Arrangement according to Claim 8, **characterized in that** the air compressor (14) is designed as an intelligent air compressor (14) with a separate control device (25).

11. Arrangement as per the preamble of Claim 1 or according to one of the preceding claims, **characterized in that** the arrangement has an exhaust-gas compressor (32) which is connected to an exhaust line (AG) of the internal combustion engine (1) and which can be driven by the exhaust gas and which can be coupled to the internal combustion engine (1) and/or is designed as an air compressor.

12. Arrangement according to Claim 11, **characterized in that** the exhaust-gas compressor (32) can be controlled by means of at least one valve (34).

13. Arrangement according to Claim 11 or 12, **characterized in that** the exhaust-gas compressor (32) is designed as an intelligent compressor with a separated control unit integrated therein.

14. Arrangement according to one of the preceding claims, **characterized in that** the turbocharger device (6) is connected to a secondary air supply device (35) for the controlled supply of at least a partial quantity of compressed stored secondary air.

15. Arrangement for recovering energy from the exhaust gas (10) of an internal combustion engine (1), having:
a) a turbocharger device (6), which is driven by the exhaust gas (10), for generating compressed intake air for the internal combustion engine (1) ;
b) a first air motor which can be driven by means of stored compressed air and/or compressed intake air of the turbocharger device in order to generate a torque and which can be coupled to the internal combustion engine for a transmission of torque; and/or
c) a second air motor which can be driven by means of stored compressed air and/or exhaust gas of the internal combustion engine in order to generate a torque and which can be coupled to the internal combustion engine for a transmission of torque,
**characterized in that**
d) the first air motor is a reversible air compressor (14) and the second air motor is a reversible exhaust-gas compressor (32).

16. Internal combustion engine (1) having an arrangement for recovering energy from the exhaust gas (10) of the internal combustion engine (1) according to one of the preceding claims.

17. Method for recovering unused energy from exhaust gas (10) of an internal combustion engine (1), with a partial quantity of intake air which is compressed by means of a turbocharger device (6), which is driven by the exhaust gas (10), being extracted from the internal combustion engine (1) by an air compressor (14) with at least one compressor stage and being stored in at least one air storage tank (17, 18), wherein that partial quantity of the compressed intake air of the turbocharger device (6) that can be extracted by the air compressor (14) is adjusted,
**characterized in that** the air compressor (14) is reversed and, as a first air motor driven by means of the compressed air stored in the at least one air storage tank (17, 18) and/or by means of compressed intake air extracted from the turbocharger device (6), generates a torque which is transmitted to the internal combustion engine (1) by means of a controllable clutch device (26).

18. Method according to Claim 17, wherein at least a partial quantity of exhaust gas (10) is used for driving an exhaust-gas compressor (32) in order to compress air for storing in the air storage tanks (17, 18), **characterized in that** the exhaust-gas compressor (32) is reversed and, as a second air motor driven by means of the compressed air stored in the at least one air storage tank (17, 18) and/or by means of exhaust gas of the internal combustion engine (1), generates a torque which is transmitted to the internal combustion engine (1) by means of a controllable clutch device (26').

19. Method according to Claim 17 or 18, **characterized in that** at least a partial quantity of stored air from the air storage tanks (17, 18) is supplied to the internal combustion engine (1) in addition to the compressed intake air.

## Revendications

1. Système de récupération d'énergie issue des gaz d'échappement (10) d'un moteur à combustion interne (1), comprenant :
a) un dispositif compresseur (6) entraîné par lesdits gaz d'échappement (10) à engendre de l'air d'aspiration comprimé pour ledit moteur à combustion interne (1) ; et
b) un compresseur de l'air (14) à au moins un étage de compression, qui est relié audit dispositif compresseur (6) pour le prélèvement d'au moins un volume partiel dudit air d'aspiration comprimé ;
c) dans lequel ledit volume partiel de l'air d'aspiration comprimé dudit dispositif compresseur (6), qui est prélevable par ledit compresseur d'air (14), est réglable, et
d) dans lequel ledit compresseur d'air (14) est relié à au moins un seul réservoir accumulateur d'air (17, 18) pour l'accumulation dudit volume partiel de l'air d'aspiration comprimé,
**caractérisé en ce que**
e) ledit compresseur d'air (14) est configuré pour la commutation pour un entraînement par l'air comprimé accumulé dans ledit au moins seul réservoir accumulateur d'air (17, 18).

2. Système selon la revendication 1, **caractérisé en ce que** ledit volume partiel de l'air d'aspiration comprimé est réglable en fonction d'au moins un seul paramètre d'opération dudit moteur à combustion interne (1) et/ou d'au moins un seul paramètre d'opération dudit dispositif compresseur (6).

3. Système selon la revendication 1 ou 2, **caractérisé en ce que** ledit volume partiel de l'air d'aspiration comprimé est réglable moyennant une soupape de prélèvement commandable (20).

4. Système selon une quelconque des revendications précédentes, **caractérisé en ce que** ledit volume partiel prélevable de l'air d'aspiration comprimé est réglable par le réglage d'un volume d'aspiration dudit compresseur d'air (14).

5. Système selon la revendication 4, **caractérisé en ce que** ledit compresseur d'air (14) est configuré pour l'entraînement commandable pour le réglage du volume d'aspiration.

6. Système selon la revendication 5, **caractérisé en ce que** ledit compresseur d'air (14) est configuré pour l'accouplement audit moteur à combustion interne (1).

7. Système selon la revendication 4, 5 ou 6, **caractérisé en ce que** ledit compresseur d'air (14) comprend au moins une seule soupape de commande (21, 22, 23, 24) pour le réglage du volume d'aspiration.

8. Système selon une quelconque des revendications précédentes, qui comprend au plus un dispositif de commande (25) pour la commande dudit volume partiel réglable de l'air d'aspiration comprimé.

9. Système selon la revendication 8, **caractérisé en ce que** ledit dispositif de commande (25) constitue un composant d'une unité de commande dudit moteur à combustion interne (1).

10. Système selon la revendication 8, **caractérisé en ce que** ledit compresseur d'air (14) est configuré sous forme d'un compresseur d'air intelligent (14) à un moyen de commande propre (25).

11. Système selon le préambule de la revendication 1 ou selon une quelconque des revendications précédentes, **caractérisé en ce que** le système comprend un compresseur des gaz d'échappement (32) relié à un collecteur d'échappement (AG) dudit moteur à combustion interne (1) et entraînable par les gaz d'échappement, lequel compresseur des gaz d'échappement est configuré pour l'accouplement audit moteur à combustion interne (1) et/ou sous forme d'un compresseur d'air.

12. Système selon la revendication 11, **caractérisé en ce que** ledit compresseur des gaz d'échappement (32) est commandable moyennant au moins une seule soupape (34).

13. Système selon la revendication 11 ou 12, **caractérisé en ce que** ledit compresseur des gaz d'échappement (32) est configuré sous forme d'un compresseur intelligent à une unité de commande propre y intégrée.

14. Système selon une quelconque des revendications précédentes, **caractérisé en ce que** ledit dispositif compresseur (6) est relié à un système d'alimentation d'air supplémentaire (35) pour l'alimentation commandée d'au moins un volume partiel de l'air supplémentaire comprimé accumulé.

15. Système de récupération d'énergie issue des gaz d'échappement (10) d'un moteur à combustion interne (1), comprenant :
a) un dispositif compresseur (6) entraîné par lesdits gaz d'échappement (10) à engendre de l'air d'aspiration comprimé pour ledit moteur à combustion interne (1) ; et
b) un compresseur de l'air (14) à au moins un étage de compression, qui est relié audit dispositif compresseur (6) pour le prélèvement d'au moins un volume partiel dudit air d'aspiration comprimé ;
c) dans lequel ledit volume partiel de l'air d'aspiration comprimé dudit dispositif compresseur (6), qui est prélevable par ledit compresseur d'air (14), est réglable, et
d) dans lequel ledit compresseur d'air (14) est relié à au moins un seul réservoir accumulateur d'air (17, 18) pour l'accumulation dudit volume partiel de l'air d'aspiration comprimé,
**caractérisé en ce que**
e) ledit compresseur d'air (14) est configuré pour la commutation pour un entraînement par l'air comprimé accumulé dans ledit au moins seul réservoir accumulateur d'air (17, 18).

16. Moteur à combustion interne (1) comprenant un système de récupération d'énergie issue des gaz d'échappement (10) du moteur à combustion interne (1) selon une quelconque des revendications précédentes.

17. Procédé de récupération d'énergie non-utilisée issue des gaz d'échappement (10) d'un moteur à combustion interne (1), dans lequel un volume partiel de l'air d'aspiration dudit moteur à combustion interne (1), qui est comprimé par un dispositif compresseur (6) entraîné par les gaz d'échappement (10), est prélevé par un compresseur d'air (14) à au moins un seul étage de compression et est accumulé dans au moins un seul réservoir accumulateur d'air (17, 18), audit volume partiel de l'air d'aspiration comprimé dudit dispositif compresseur (6), qui est prélevable par ledit compresseur d'air, est réglé, **caractérisé en ce que** ledit compresseur d'air (14) est commuté et engendre un couple moteur en tant que premier moteur à air entraîné par l'air comprimé accumulé dans ledit au moins seul réservoir accumulateur air (17, 18) et/ou prélevé par ledit dispositif compresseur, lequel couple moteur est transmis audit moteur à combustion interne (1) via un dispositif d'accouplement (26) commandable.

18. Procédé selon la revendication 17, dans lequel au moins un volume partiel des gaz d'échappement (10) à entraîner un compresseur des gaz d'échappement (32) est utilisé afin de comprimer de l'air pour l'accumulation dans ledit réservoir accumulateur d'air (17, 18), **caractérisé en ce que** ledit compresseur des gaz d'échappement (32) est commuté et engendre un couple moteur en tant que deuxième moteur à air entraîné par l'air comprimé accumulé dans ledit au moins seul réservoir accumulateur air (17, 18) et/ou entraîné par les gaz d'échappement du moteur à combustion interne (1), lequel couple moteur est transmis audit moteur à combustion interne (1) via un dispositif d'accouplement (26') commandable.

19. Procédé selon la revendication 17 ou 18, **caractérisé en ce qu'**au moins un volume partiel de l'air accumulé est alimenté à partir dudit réservoir accumulateur d'air (17, 18) audit moteur à combustion interne (1), au plus de l'air d'aspiration comprimé.
